# EUROPÄISCHE PATENTSCHRIFT

(11) **EP 0 806 338 B1**
(45) Veröffentlichungstag und Bekanntmachung des Hinweises auf die Patenterteilung: **21.07.1999**
(21) Anmeldenummer: 96810222.8
(22) Anmeldetag: 10.04.1996
(51) Int. Cl.: B62D 33/04, F16B 7/18

(54) **Profilverbindung**
Connection for profiled sections
Liaison pour profilés

(43) Veröffentlichungstag der Anmeldung: 12.11.1997
(73) Patentinhaber: Alusuisse Technology & Management AG, 8212 Neuhausen am Rheinfall (CH)
(72) Erfinder: Röllin, Ulrich, CH-8048 Zürich (CH)

(56) Entgegenhaltungen:
- EP-A- 0 645 299
- EP-A- 0 671 566
- EP-A- 0 685 381
- CH-A- 627 982
- DE-U- 9 400 107

## Beschreibung

Die Erfindung betrifft eine Verbindung zwischen zwei aneinanderstossenden Profilen mit einem Verbindungsstück, wobei an einander gegenüberstehenden Seitenwänden der Profile angeformte Nockenstreifen eine in der Profillängsachse verlaufende, hinterschnittene Nut bilden und das den Nockenstreifen aufliegende Verbindungsstück über ein in die Nut einführbares, die Nockenstreifen als Gegenanschlag hintergreifendes Klemmteil an jedem Profil kraftschlüssig lösbar festgelegt ist.

Aus der CH-A-627 982 sind Verbindungen von Metallprofilen mittels Eckverbindungsstücken für den Zusammenbau von Gerippestrukturen für Wagenkasten von Strassen- und Schienenfahrzeugen bekannt. Das dort beschriebene Eckverbindungsstück weist federartige Anformungen auf, welche in nutenartigen Vertiefungen der Metallprofile geführt und durch Schraubverbindungen an diesen festgelegt sind. Die Schraubverbindungen umfassen Klemmstücke, welche in die nutenartigen Vertiefungen der Metallprofile eingesetzt und dort in Hinterschneidungen eingeschwenkt werden.

Derartige auf Reibschluss basierende Profilverbindungen erlauben in Profillängsrichtung nur eine geringe Kraftübertragung, so dass solche Verbindungen zur Erfüllung ihrer vorgesehenen Aufgabe oft eine zusätzliche mechanische Verstärkung wie beispielsweise eine Schweissverbindung benötigen. Derartige Verstärkungen sind in ihrer Herstellung jedoch relativ aufwendig und erschweren zudem ein allfälliges späteres Lösen der Verbindung.

Eine gewisse Verbesserung der aus der CH-A-627 982 bekannten Profilverbindungen hinsichtlich der Kraftübertragung in Profillängsrichtung lässt sich mit den speziell ausgebildeten Querschnittsformen von Verbindungsstück und Befestigungsnocken, wie sie im Detail in der EP-A-671 566 offenbart sind, erzielen.

Aus der DE-U-9400107 ist eine Verbindung von Hohlprofilen durch ein Verbindungsstück bekannt, wobei im Inneren der Hohlprofile eine hinterschnittene Nut Schrauben als Klemmteile aufnimmt, die durch Ausnehmungen im Verbindungsbereich die Nut hintergreifen.

Angesichts dieser Gegebenheiten hat sich der Erfinder die Aufgabe gestellt, eine Verbindung der eingangs genannten Art zu schaffen, die eine im Vergleich zu Verbindungen nach dem Stand der Technik höhere Kraftübertragung in Profillängsrichtung erlaubt. Zudem soll nach Möglichkeit auf die in der Praxis oft störende Längsöffnung der Profile verzichtet werden können.

Zur erfindungsgemässen Lösung der Aufgabe führt eine Verbindung mit den Merkmalen von Anspruch 1.

Durch das örtliche Entfernen der Profilkontur in Profillängsrichtung entsteht mindestens eine quer zur Profillängsachse liegende Anschlagfläche als Querversatzung für das in die Ausnehmung eingesetzte Verbindungsstück. Durch diese Massnahme ergibt sich eine formschlüssige Verbindung zwischen Verbindungsstück und Hohlprofil, wodurch die über das Klemmteil in Profillängsrichtung bereits vorliegende Reibschlussverbindung in idealer Weise ergänzt wird. Die erfindungsgemässe Verbindung weist somit sämtliche Vorzüge der aus der CH-A-627 982 und der EP-A-671 566 bekannten Reibschlussverbindung auf und stellt gleichzeitig mindestens eine zusätzliche Querversatzung bereit, ohne dass das Profil hierzu eine durchgehend offene Längsnut aufweisen muss.

Die Ausnehmung wird bevorzugt derart an die Dimensionen des Verbindungsstückes angepasst, dass die Oberfläche des in die Ausnehmung eingesetzten Verbindungsstückes mit der angrenzenden Profiloberfläche im wesentlichen fluchtet.

Zur Herstellung der Reibschlussverbindung zwischen Verbindungsstück und Hohlprofil werden bevorzugt die in der EP-A-671 566 vorgeschlagenen Ausbildungsformen von Verbindungsstücken, Nockenstreifen und Klemmplättchen eingesetzt. Bei einer besonders bevorzugten Ausführungsform der erfindungsgemässen Verbindung steht das Verbindungsstück über angeformte Wülste mit entsprechenden Kerben in den Nockenstreifen in Eingriff.

Die Hohlprofile können auch mehrere Nockenpaare, insbesondere zwei einander spiegelbildlich gegenüberstehende Nockenpaare, aufweisen. Ebenso kann das Hohlprofil mit Ausnahme des Verbindungsbereichs querschnittlich eine beliebige Aussenkontur aufweisen.

Insbesondere bei Profilen, die im Bereich der Verbindungsstelle eine geringe Materialdicke aufweisen, können zusätzliche Querversatzungen vorgesehen sein. Eine erste bevorzugte Möglichkeit wird darin gesehen, dasss die Ausnehmung zumindest eine erweiterte Profilöffnung zur Bildung von Anschlagflächen als zusätzliche Querversatzung umfasst. Bei einer anderen zweckmässigen Ausbildungsform ist im Bereich der Ausnehmung zur Bildung von Anschlagflächen als zusätzliche Querversatzung zumindest ein Einschnitt in der Seitenwand des Profils vorgesehen.

Die erfindungsgemässen Verbindungen können sowohl als Eckverbindungen mit beliebigem Winkel zwischen den miteinander zu verbindenden Profilen als auch zum Verbinden von zwei Profilen in Profillängsrichtung eingesetzt werden, wobei anstelle eines Eckwinkels auch ein flaches Verbindungsstück eingesetzt werden kann.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: den Querschnitt durch ein Hohlprofil mit innenliegenden Nockenstreifen;
- - Fig. 2: eine Schrägsicht auf eine Eckverbindung zwischen zwei Profilen;
- - Fig. 3: eine Seitenansicht eines Eckverbindungsstückes;
- - Fig. 4: eine Vorderansicht des Eckverbindungsstückes von Fig. 3 in Blickrichtung y;
- - Fig. 5: einen Querschnitt durch ein Profil mit eingesetztem Eckverbindungsstück;
- - Fig. 6 + 7: weitere Ausgestaltungen des Verbindungsbereichs der Eckverbindung von Fig. 2;
- - Fig. 8 + 9: eine Schrägsicht auf weitere Verbindungsarten von Profilen.

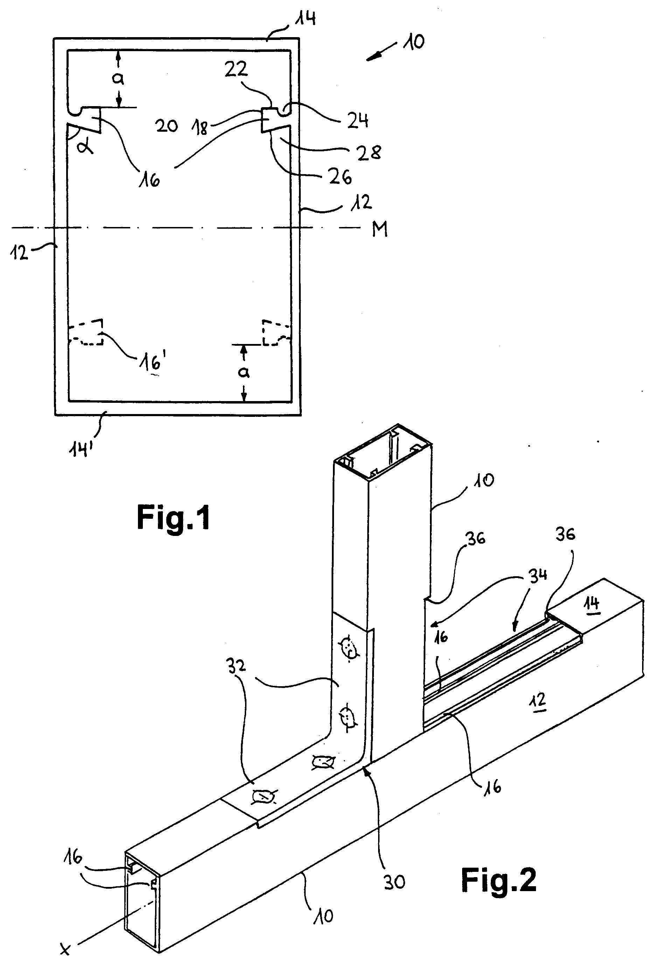

Ein in Fig. 1 dargestelltes Hohlprofil 10 rechteckigen Querschnittes mit Seitenwänden 12 und Basiswänden 14, 14' weist innenseitig von den Seitenwänden 12 in Abstand a zu einer Basiswand 14 abragende Nockenstreifen 16 auf, deren freie Enden als Nutwände 18 einer längslaufenden Nut 20 einander gegenüberstehen. Die Nockenstreifen 16 bilden auf ihrer der näheren Basiswand 14 zugewandten Seite eine Auflagefläche 22, die beim Uebergang zur Seitenwand 12 als längslaufende Kerbe 24 in den Nockenstreifen 16 eingeformt ist. Die der Auflagefläche 22 abgewandte Seite der Nockenstreifen 16 begrenzen als Gegenanschlagfläche 26 Hinterschneidungen 28 der Nut 20. Die Gegenanschlagfläche 26 schliesst mit der Seitenwand 12 einen spitzen Winkel α von beispielsweise 75° ein.

Wie in Fig. 1 gestrichelt angedeutet, kann das Hohlprofil 10 ein zweites Nockenstreifenpaar 16' aufweisen, welches der zweiten Basiswand 14' in der oben beschriebenen Weise gegenübersteht, wobei die beiden Nockenstreifenpaare 16, 16' in bezug auf eine Längsmittenebene M des Hohlprofils 10 spiegelbildlich zueinander angeordnet sind. Aus der Betrachtung von Fig. 1 ergibt sich von selbst, dass es zur Herstellung der Verbindung genügt, wenn das Hohlprofil 10 im Verbindungsbereich parallele Seitenwände 12 mit von diesen in Abstand a abragenden Nockenstreifen 16 aufweist. Der übrige Querschnitt des Profils kann beliebig ausgestaltet sein. Ebenso können selbstverständlich an der Aussenseite eines zentralen Hohlprofils weitere Hohlkammern beliebigen Querschnitts vorgesehen sein.

Bei der in Fig. 2 gezeigten Verbindungsart sind die miteinander zu verbindenden Hohlprofile 10 rechtwinklig zueinander angeordnet. Die Verbindung erfolgt über Eckverbindungsstücke 30, deren rechtwinklig zueinander angeordnete Schenkel 32 passgenau in entsprechenden Ausnehmungen 34 in den Hohlprofilen 10 sitzen und an diesen festgelegt sind. Die durch Entfernen eines Teils der entsprechenden Basiswände 14, 14' entstehenden Ausnehmungen 34 führen zu örtlich begrenzten Oeffnungen in den Hohlprofilen 10, wodurch die Nockenstreifen 16, 16' im Verbindungsbereich von aussen zugänglich sind. Die Ausnehmungen 34 begrenzen quer zur Profillängsachse x liegende Anschlagflächen 36 für die freien Enden der Schenkel 32 der Eckverbindungsstücke 30. Hierbei sind die Dimensionen der in die Ausnehmungen 34 eingesetzten Eckverbindungsstücke 30 so gewählt, dass die Oberfläche der Schenkel 32 der Eckverbindungsstücke 30 mit den angrenzenden Oberflächen der Hohlprofile 10 fluchten.

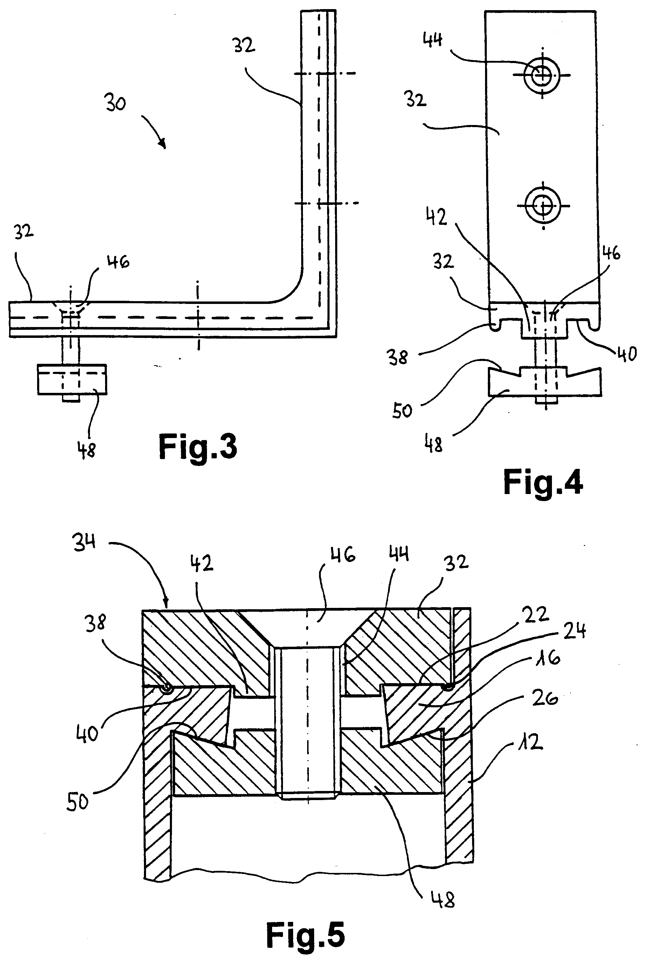

Die Schenkel 32 eines Eckverbindungsstückes 30 weisen gemäss Fig. 3 und 4 eine den Nockenstreifen 16 angepasste Querschnittsform auf. Von jedem im wesentlichen streifenförmigen Schenkel 32 ragen randständige, längslaufende Wülste 38 ab und begrenzen streifenförmige, durch eine zentrale längslaufende Ausformung 42 getrennte Anlageflächen 40. In den Schenkeln 32 sind Bohrungen 44 zur Aufnahme von Schraubenbolzen 46 mit an diesen montierten Klemmplättchen 48 vorgesehen.

Die Verbindung zwischen Eckverbindungsstück 30 und Hohlprofil 10 ist in Fig. 5 dargestellt. Zur Bereitstellung der örtlich begrenzten Ausnehmung 34 im Hohlprofil 10 wurde dessen Basisfläche 14 teilweise entfernt. Dadurch ergibt sich im Bereich der Ausnehmung 14 ein freier Zugang zu den innenliegenden Nockenstreifen 16, so dass der Schenkel 32 des Eckwinkels 30 in die Ausnehmung 34 eingesetzt und mit den Nockenstreifen 16 in Anschlag gebracht werden kann.

Die linke Seite des in Fig. 5 gezeigten Querschnittes entspricht der in Fig. 2 dargestellten Variante, d.h. die Seitenfläche des Schenkels 32 fluchtet mit der Oberfläche der teilweise entfernten Seitenwand 12. Die rechte Seite des Querschnittes von Fig. 5 zeigt eine Variante, bei der nur die Basisfläche 14 entfernt ist und demzufolge der Schenkel 32 an der Innenseite der Seitenwand 12 endet.

Die Anlageflächen 40 des Schenkels 32 liegen den Auflageflächen 22 der Nockenstreifen 16 derart an, dass die Wülste 38 in die Kerben 24 eingreifen, wobei darauf zu achten ist, dass auch bei angezogenen Schraubenbolzen 46 die Wülste 38 nie in der Kerbengrundfläche aufliegen. Die zentrale Ausformung 42 am Schenkel 32 greift in montierter Lage federartig in die durch die Nockenstreifen 16 gebildete längslaufende Nut 20 ein. Das Klemmplättchen 48 liegt mit randständigen Schrägflächen 50 über die Gegenanschlagflächen 26 den Nockenstreifen 16 an. Die Anzahl der jedem Schenkel 32 zugeordneten Klemmplättchen 48 richtet sich nach der zu erwartenden Belastung sowie nach der Länge der Schenkel 32.

Die in Fig. 3 bis 5 dargestellten Querschnittsformen der Eckverbindungsstücke 30, der Nockenstreifen 16 sowie des Klemmplättchens 48 sind in der EP-A-671 566, auf die hier ausdrücklich bezug genommen wird, ausführlich beschrieben.

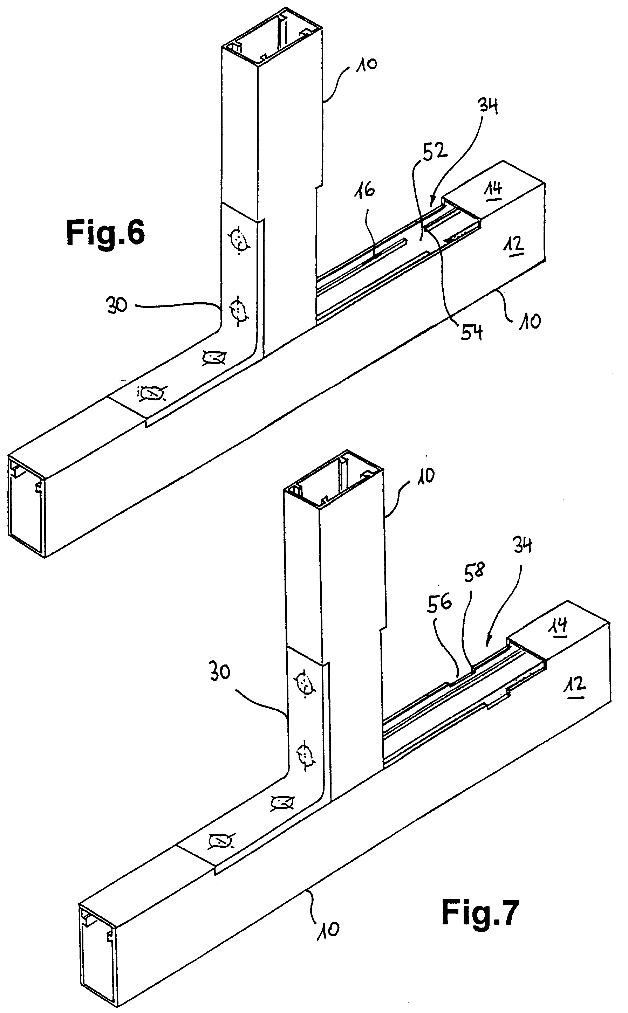

Bei der in Fig. 6 gezeigten Ausnehmung 34 im Hohlprofil 10 sind neben der teilweise entfernten Basisfläche 14 auch die Nockenstreifen 16 örtlich durch Ausfräsen so entfernt, dass eine erweiterte Oeffnung 52 entsteht. Dadurch ergeben sich zusätzliche Anschlagflächen 54 für ein am Schenkel 32 des Eckverbindungsstückes 30 angeformtes, angeschraubtes oder sonstwie befestigtes, in der Zeichnung nicht dargestelltes Einsatzstück, das beim Einsetzen des Eckverbindungsstückes 30 in die Ausnehmung 34 in die erweiterte Profilöffnung 52 eingreift. Die dadurch entstehenden, zusätzlichen Querversatzungen drängen sich insbesondere dann auf, wenn das Hohlprofil 10 im Bereich der Verbindungsstelle eine geringe Materialdicke aufweist und demzufolge die Anschlagfläche 36 für den Schenkel 32 des Eckverbindungsstückes 30 hohen Belastungen nicht zu genügen vermag. Anstelle einer einzelnen erweiterten Profilöffnung 52 können auch mehrere Oeffnungen vorgesehen sein.

Eine weitere Möglichkeit zur Bereitstellung weiterer Querversatzungen ist in Fig. 7 dargestellt. In den Seitenwänden 12 des Hohlprofils 10 sind einander gegenüberstehende Einschnitte 56 angeordnet, durch die zusätzliche Anschlagflächen 58 in Form von Querversatzungen bereitgestellt werden. In diese Einschnitte 56 greifen am Schenkel 32 des Eckverbindungsstückes 30 angeordnete, in der Zeichnung nicht dargestellte Gegenglieder ein.

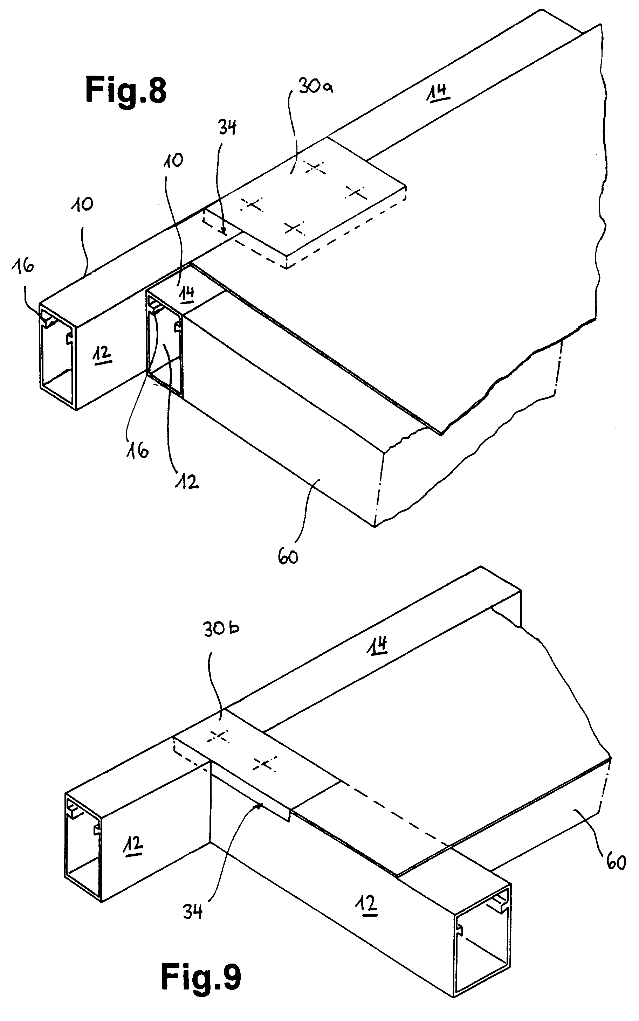

Bei der in Fig. 8 gezeigten Verbindungsart sind die miteinander zu verbindenden Hohlprofile 10 parallel zueinander angeordnet. Das Verbindungsstück 30a wird hier durch eine Profilplattegebildet, deren Verbindung mit den einzelnen Hohlprofilen ebenfalls über die Nockenstreifen 16 hintergreifende Klemmplättchen erfolgt. Im Beispiel von Fig. 8 bildet das Hohlprofil 10 den Randabschluss einer Verbundplatte 60. Durch die Verwendung des Hohlprofils 10 als sogenanntes Anschlussprofil lassen sich Verbundplatten 60 auf einfache Weise an einem weiteren Hohlprofil 10 festlegen.

Fig. 9 zeigt eine weitere Verbindungsart, bei der die miteinander zu verbindenden Hohlprofile 10 rechtwinklig zueinander angeordnet sind. Wie im Beispiel von Fig. 8 bildet auch hier eines der Hohlprofile 10 ein Randprofil einer Verbundplatte 60. Dieses Abschlussprofil liegt dem zweiten Hohlprofil 10 stirnseitig an. Ein als Flachprofil ausgestaltetes Verbindungsstück 30b ist an den Hohlprofilen 10 in der gleichen Weise festgelegt, wie dies an den vorstehend beschriebenen Ausführungsbeispielen bereits erläutert worden ist.

Die für die Hohlprofile 10 sowie für die Verbindungsstücke 30, 30a, b eingesetzten Werkstoffe richten sich im wesentlichen nach den an die mechanische Festigkeit und Stabilität von Profilkonstruktionen und deren Verbindungsstellen gestellten Anforderungen. Geeignete Werkstoffe sind Metalle, insbesondere Leichmetalle wie Aluminium, aber auch Kunststoffe und Verbundmaterialien.

## Patentansprüche

1. Verbindung zwischen zwei aneinanderstossenden Profilen (10) mit einem Verbindungsstück (30), wobei an einander gegenüberstehenden Seitenwänden (12) der Profile (10) angeformte Nockenstreifen (16) eine in der Profillängsachse (x) verlaufende, hinterschnittene Nut (20) bilden und das den Nockenstreifen (16) aufliegende Verbindungsstück (30) über ein in die Nut (20) einführbares, die Nockenstreifen (16) als Gegenanschlag hintergreifendes Klemmteil (48) an jedem Profil (10) kraftschlüssig lösbar festgelegt ist,
dadurch gekennzeichnet, dass
die als Hohlprofile (10) ausgestalteten Profile im Verbindungsbereich eine Ausnehmung (34) aufweisen und die Ausnehmung (34) von mindestens einer quer zur Profillängsachse (x) liegenden, durch einen zwischen den Nockenstreifen (16) und einer Basiswand (14) bestehenden Abstand (a) gebildeten Anschlagfläche (36) für das in die Ausnehmung (34) eingesetzte Verbindungsstück (30) begrenzt ist.

2. Verbindung nach Anspruch 1, dadurch gekennzeichnet, dass die Oberfläche des in die Ausnehmung (34) eingesetzten Verbindungsstückes (30) mit der angrenzenden Profiloberfläche im wesentlichen fluchtet.

3. Verbindung nach Anspruch 1 oder 2, dadurch gekennzeichnet, dass das Verbindungsstück (30) über angeformte Wülste (38) mit entsprechenden Kerben (24) in den Nockenstreifen (16) in Eingriff steht.

4. Verbindung nach einem der Ansprüche 1 bis 3, dadurch gekennzeichnet, dass die Hohlprofile (10) mehrere Nockenpaare, insbesondere zwei einander spiegelbildlich gegenüberstehende Nockenpaare (14, 14'), aufweisen.

5. Verbindung nach einem der Ansprüche 1 bis 4, dadurch gekennzeichnet, dass die Ausnehmung (34) zumindest eine erweiterte Profilöffnung (52) zur Bildung von Anschlagflächen (54) als zusätzliche Querversatzung umfasst.

6. Verbindung nach einem der Ansprüche 1 bis 5, dadurch gekennzeichnet, dass die Ausnehmung (34) zumindest einen Einschnitt (56) in der Seitenwand (12) zur Bildung von Anschlagflächen (58) als zusätzliche Querversatzung umfasst.

## Claims

1. Connection between two abutting sections (10) using a connecting piece (30), in which integral strips (16) on facing side walls (12) of the sections (10) form an undercut groove (20) running in the longitudinal direction (x) of the section (10) and the connecting piece (30) resting on the strips (16) is releasably secured mechanically in place by virtue of fit, by means of a clamping piece (48) which can be introduced into the groove (20) and engages the strips (16) in that section (10) as a counter-stop,
characterised in that the
the said sections in the form of hollow sections (10) exhibit a recess (34) in the region of the connection, and the recess (34) is delimited by at least one arresting surface (36) for the connecting piece (30) inserted into the recess (34), said arresting surface (36) lying transverse to the longitudinal axis (x) of the section (10) and being formed by a distance (a) between the strips (16) and a base wall (14).

2. Connection according to claim 1, characterised in that the surface of the connecting piece (30) inserted in the recess (34) is essentially flush with the neighbouring section surfaces

3. Connection according to claim 1 or 2, characterised in that the connecting piece (30) is engaged in integral projections (38) via corresponding notches (24) in the strips (16).

4. Connection according to one of the claims 1 to 3, characterised in that the hollow sections (10) exhibit a plurality of pairs of strips, in particular two mirror-imaged, facing pairs (16, 16')

5. Connection according to one of the claims 1 to 4, characterised in that the recess (34) comprises at least one extended section opening (52) to form arresting surfaces (54) as additional transverse bracing means.

6. Connection according to one of the claims 1 to 5, characterised in that the recess (34) comprises at least one cut (56) in the side wall (12) in order to form arresting surfaces (58)as additional transverse bracing means.

## Revendications

1. Liaison entre deux profilés butant l'un contre l'autre (10) avec une pièce de liaison (30), dans laquelle des nervures filantes (16), venues de moulage sur des parois latérales (12), situées en face l'une de l'autre, des profilés (10) forment une rainure (20) orientée selon l'axe longitudinal (x) du profilé et formant un chambrage, et dans laquelle la pièce de liaison (30), qui s'appuie sur les nervures filantes (16), est fixée sur chaque profilé (10) par serrage et de façon amovible, par l'intermédiaire d'une pièce de bridage (48) qui peut s'introduire dans la rainure (20) et vient saisir par derrière les nervures filantes (16) servant de contre-butée.
caractérisée par le fait que
les profilés, ayant la structure de profilés creux (10), présentent dans la zone de liaison un évidement (34) et l'évidement (34) est limité par au moins une surface de butée (36), située transversalement par rapport à l'axe longitudinal (x) du profilé et formée par la distance (a) existant entre les nervures filantes (16) et une paroi de base (14), pour la pièce de liaison (30) insérée dans l'évidement (34).

2. Liaison selon la revendication 1, caractérisée par le fait que la surface supérieure de la pièce de liaison (30) insérée dans l'évidement (34) affleure sensiblement la surface du profilé qui la jouxte.

3. Liaison selon la revendication 1 ou 2, caractérisée par le fait que la pièce de liaison (30) vient en prise, par l'intermédiaire de bourrelets (38) venus de moulage, avec des encoches appropriées (24) prévues dans les nervures filantes (16).

4. Liaison selon l'une des revendications 1 à 3, caractérisée par le fait que les profilés creux (10) présentent plusieurs paires de nervures, en particulier deux paires de nervures (14, 14') situées symétriquement l'une de l'autre par rapport à un plan.

5. Liaison selon l'une des revendications 1 à 4, caractérisée par le fait que l'évidement (34) comporte au moins une ouverture élargie (52) du profilé pour former des surfaces de butée (54) servant d'embrèvement transversal supplémentaire.

6. Liaison selon l'une des revendications 1 à 5, caractérisée par le fait que l'évidement (34) comporte au moins une entaille (56) dans la paroi latérale (12) pour former des surfaces de butée (58) servant d'embrèvement transversal supplémentaire.
